# EUROPEAN PATENT SPECIFICATION

(11) **EP 2 680 182 B1**
(45) Date of publication and mention of the grant of the patent: **16.03.2016**
(21) Application number: 13167024.2
(22) Date of filing: 08.05.2013
(51) Int. Cl.: G06F 21/55

(54) **Mobile device and method to monitor a baseband processor in relation to the actions on an application processor**
Mobile Vorrichtung und Verfahren zur Überwachung eines Basisbandprozessor in Bezug auf die Reaktion eines Anwendungsprozessors
Dispositif mobile et procédé pour surveiller un processeur de bande de base en relation avec les actions sur un processeur d'application

(30) Priority: 29.06.2012 US 201261666742 P
(43) Date of publication of application: 01.01.2014
(73) Proprietor: GSMK Gesellschaft für sichere Mobile Kommunikation mbH, 10117 Berlin (DE)
(72) Inventor: Rieger, Frank, 10117 Berlin (DE); Uvin, Vadim, 11017 Berlin (DE)
(74) Representative: 2K Patentanwälte Blasberg Kewitz & Reichel

(56) References cited:
- DE-A1-102006 016 994
- US-A1- 2009 260 081
- US-A1- 2010 121 916
- US-A1- 2010 251 370
- US-A1- 2012 096 539

## Description

### Field of the Invention

The invention disclosed herein describes devices and methods to mitigate and prevent over-the-air attacks against the baseband processor of mobile devices by means of monitoring the baseband processor's behavior, correlating this behavior with the intentions of the user (as expressed by the behavior of the application processor), and taking appropriate countermeasures against attacks.

### Background of Invention

Modern mobile devices (typically, mobile phones and tablet computers with cellular network connectivity) consist of at least two separate processors: The so called application CPU (Central Processing Unit), which runs the operating system, user interface and applications, and the so-called baseband CPU that runs all the necessary software to interface with the mobile network (e.g. GSM Global System for Mobile Communications, 3G, CDMA (Code Division Multiple Access), CDMA2000, UMTS Universal Mobile Telecommunications System, or LTE (Long Term Evolution).

A mobile application processor is a system on a chip designed to support applications running in a mobile operating system environment. The system on a chip can be physically independent from the baseband CPU as separate chip or can be implemented physically integrated into one chip together with the baseband CPU.

A mobile application processor provides a self-contained operating environment that delivers all system capabilities needed to support a device's applications, including memory management, graphics processing, and multimedia decoding.

Mobile application processors may be independent from other specialized processors in the same mobile device, such as a phone's baseband (wireless communications) processor.

Some vendors manufacture their own mobile application processors. Other vendors purchase their mobile application processors, using them as original equipment manufacturer (OEM) components. For example, the Qualcomm Snapdragon mobile application processor is contained in many smart phones that use Snapdragon to run the Android operating system and Android applications. In this way, every phone manufacturer need not develop its own mobile application processor (although they can); this approach reduces bill-of materials cost and makes it possible to develop low-cost "smart" consumer electronics.

A wide variety of mobile devices contain mobile application processors, including feature phones, smartphones, tablets, eReaders, netbooks, automotive navigation devices, and gaming consoles.

A baseband processor (also known as baseband radio processor, BP, or BBP) is a device (a chip or part of a chip) in a network interface that manages all the radio functions (all functions that require an antenna). This may or may not include WiFi and/or Bluetooth. It typically uses its own RAM and firmware. This RAM can also be shared with the application processor.

The reasons for separating the baseband processor from the application CPU (known as the AP or Application Processor) are:
1. radio performance: radio control functions (signal modulation, encoding, radio frequency shifting, etc.) are highly timing dependant, and require a realtime OS
2. legal: some authorities (e.g. the U.S. Federal Communications Commission (FCC)) require that the entire software stack running on a device which communicates with the cellular network must be certified. Separating the BP into a different component allows reusing them without having to certify the full AP.
3. radio reliability: Separating the BP into a different component ensures proper radio operation while allowing application and OS changes.

Baseband processors typically run a RTOS written in firmware: e.g. Nucleus RTOS (iPhone 3G/3GS/iPad), ENEA's OSE, VRTX, ThreadX (iPhone 4)

Significant baseband manufacturers include MediaTek, Broadcom, Icera, Intel Mobile Communications- former infineon wireless division, Qualcomm, ST-Ericsson.

The BP and the AP can communicate and exchange information. One possibility is to use shared memory, which is controlled by a memory controller or a memory management unit. In this context the terms memory controller and memory management are used to identify the same unit which has the functionality of a memory controller, of a memory management unit, or of both. The memory controller controls regions of the memory for the AP and the BP and in some areas concurrent access is possible by both the AP and the BP. Also a bus system is possible over which the AP and the BP exchange information. Also private memory sections with private memory controllers and a mutual memory controller for a shared area are possible solutions. There is also a certain exchange of commandos between BP and AP, for example to initiate a call from an application running on the AP, or to start an application when a call is detected by the BP. The memory controller is a digital circuit which manages the flow of data going to and from the main memory. It can be a separate chip or integrated into another chip, such as on the die of a microprocessor. This is also called a Memory Chip Controller (MCC). Memory controllers contain the logic necessary to read and write to RAM or DRAM, and to "refresh" the DRAM by sending current through the entire device. Without constant refreshes, DRAM will lose the data written to it as the capacitors leak their charge within a fraction of a second.
Reading and writing to DRAM is performed by selecting the row and column data addresses of the DRAM as the inputs to the multiplexer circuit, where the demultiplexer on the DRAM uses the converted inputs to select the correct memory location and return the data, which is then passed back through a multiplexer to consolidate the data in order to reduce the required bus width for the operation. Also the memory controller might be necessary to control the concurrent access to the RAM by different component of the device and the CPUs of the device.

While the security situation for software running on the application CPU largely follows the methods and procedures developed for desktop computers (e.g. running anti-virus software, firewalls, restrict code execution to signed applications, etc.), the security of the baseband processor has been mostly ignored so far. This is despite of the fact that the baseband CPU is a complex hardware component in an exposed position: The baseband CPU is connected on one side to the mobile network(s) and on the other side to the application CPU. All data transmissions, phone calls, SMS messages, etc. from and to the mobile networks as requested by software running on the application CPU pass through the baseband CPU.

With increasing availability of private GSM and 3G base stations, a so far largely neglected class of attacks against the security and integrity of a mobile device becomes feasible and, consequently, more widespread. This class of attacks is characterized by forcing or "seducing" the victim's mobile device to camp on a base station that is under the control of the attacker. The attacker then uses manipulated transmissions to trigger security vulnerabilities on the victim's mobile device (e.g. buffer overruns, memory corruption, stack overflows etc.) and cause the victim's mobile device to behave in ways favorable to the attacker. The attacker can for example cause the victim's mobile device to accept incoming calls without ringing or any user interaction (thus allowing the attacker to eavesdrop onto conversations held in the vicinity of the victim's phone), or let malicious software run on the baseband CPU to cause unintended behavior like monitoring of ongoing communications or exfiltration of critical data.

The security quality of the software running on today's baseband CPUs is on average rather low, as large parts of the necessary protocol stacks haven been written back in the 1990s, before secure programming guidelines were known or observed. Fixing or patching baseband software for security reasons is very seldom done by the device manufacturers. There is a multitude of reasons for this problem: The baseband chipsets are developed and manufactured by a very small group of specialized companies which typically supply both the chips and the software/firmware running on them. The baseband software is usually customized to the needs of the specific phone either by the baseband processor's manufacturer, the phone's manufacturer, or both. These relationships, interdependencies, and the question of code ownership are often complicated. The result is a situation where baseband firmware is typically only updated when there are problems with battery lifetime or data throughput. Building new baseband firmware is a process that might also involve the need to obtain new regulatory approvals from bodies like the Federal Communications Commission (FCC), which is a costly and time-consuming, such that the process may not be completed during the market life cycle of the mobile device in question.

The resulting situation is detrimental to the security and protection of the mobile device's user against the types of over-the-air-attack described above. Even when new attacks are published and become widespread, the standard simple defense strategy of applying a software update may not be available. The invention disclosed herein therefore describes the missing piece in the security armor: means and methods to mitigate and prevent these types of attacks.

'US 2009/0260061A1 discloses a system to control the access to a baseboard management controller.

### Summary of Invention

The invention intends to provide a solution for the missing security on the baseband processor.

In order to defend against an attack on the baseband CPU, the attack first needs to be detected. As the baseband firmware itself typically contains only insufficient or no provisions for detection of attacks, a new method is required. One core idea behind the invention is to monitor the behavior of the baseband CPU, as reflected in various externally observable signs, and correlate this behavior with information about the actual intended activities of the mobile device's user. The invention consists of several components.

Method for detecting an attack on the baseband processor of a mobile device which contains a baseband processor and an application processor, which may or may not be integrated in a single chip, comprising the steps:
a) monitoring, by dedicated baseband monitor software (can also be a hardware component), the behavior of the baseband processor by using features available on the respective mobile device,
b) monitoring, by a dedicated application monitor component (which can be implemented in either software or hardware), the behavior of the application processor by keeping a record of the parameters, execution time, and execution duration of legitimate software and user activities on the application processor that cause normal baseband activities as intended by the user;
c) correlating by an evaluator component (which can be implemented in either software or hardware) the baseband processor behavior with application processor behavior in order to distinguish between legitimate and suspicious/illegitimate baseband activities,
d) initiation of countermeasures by a defense component (which can be implemented in either software or hardware) designed to ward off the suspicious/illegitimate baseband activities.

In a possible embodiment the data collection, aggregation and analysis of detected suspicious events from multiple mobile devices can be used by a centralized reporter monitoring component to distribute warnings to the users of either all or only a selected subset of mobile devices connected to the respective reporter component, to adjust the behavior of the evaluator mechanism of mobile devices connected to the respective reporter, and/or to initiate more extensive logging. This is done by centralized server structure which is connected to the devices over the internet.

In a possible embodiment the initiation of countermeasures designed to ward off the suspicious/illegitimate baseband activities comprises one or more of the following: resetting the baseband processor, resetting the phone, forcing all connections to be dropped. It has to be noted that this list is not limited to the listed options.

In a possible embodiment the monitoring by the baseband monitor comprises one or more of the following:
- collecting information on power consumption of individual hardware components of the mobile device,
- collecting information on audio path configuration,
- collecting information on the response time to normal service requests from the application processor to the baseband processor;
- monitoring of communication interfaces or memory areas shared between application processor and baseband processor for atypical communication patterns,
- monitoring of communication interfaces and memory areas shared between application processor and baseband for patterns associated with exploit attempts,
- collecting information obtained from the baseband processor's debugging output. It has to be noted that this list is not limited to the listed options.

In a possible embodiment the monitoring of communication interfaces or memory areas shared between application processor and baseband processor for patterns associated with exploit attempts, comprises one or more of the following:
- Monitoring malformated messages or data structures or very large data blocks;
- Monitoring the usage of procedures, functions, features or messages not seen in normal operations;
- Monitoring attempts to access memory areas not consistent with normal operations.

It has to be noted that this list is not limited to the listed options.

In a possible embodiment the collecting of information obtained from the baseband processor's debugging output comprises one or more of the following:
- timing and volume of voice call setup attempts,
- timing and volume of data transmission,
- timing and volume of SMS message transmission,
- timing and sequence of establishment of traffic channels.

In a possible embodiment the evaluator component runs as an application on the application processor.

In a possible embodiment the evaluator component flags the absence of standard A5/1, A5/2, or A5/3 link encryption on GSM or 3G/UMTS/W-CDMA mobile networks which leads the defense component to issue a warning to the mobile device's user that link encryption has been deactivated.

In a possible embodiment the evaluator component flags the presence of a rogue base station that does not belong to the legitimate mobile network and the defense component warns the mobile device's user that a rogue base station (a so-called "IMSI catcher") has been detected, and/or the 'defense' component shuts down the baseband processor in order to prevent exploitation.
An IMSI catcher is essentially a false mobile tower acting between the target mobile phone(s) and the service provider's real towers. As such it is considered a Man In the Middle (MITM) attack. It is used as an eavesdropping device used for interception and tracking of cellular phones and usually is undetectable for the users of mobile phones. Such a virtual base transceiver station (VBTS) is a device for identifying the International Mobile Subscriber Identity (IMSI) of a nearby GSM mobile phone and intercepting its calls and messages.

In a possible embodiment the evaluator component flags the presence of a rogue base station that does not belong to the legitimate mobile network using one or more of the following pieces of information:
- cell identification, distance, and signal strength,
- signal growth/attenuation,
- forced network change from 3G to 2G network,
- unusual changes in the list of neighboring cells,
- unusual configuration parameters of the mobile base station designed to make it appear more 'attractive' to the targeted mobile device(s),
- network parameters not consistent with the mobile device's location and/or the currently selected mobile network operator

It has to be noted that this list is not limited to the listed options.

In a possible embodiment the evaluator component categorizes activities on the baseband processor in different classes ranging from normal/inconspicious to highly suspicious,

In a possible embodiment the evaluator is plotting all the events in a diagram that shows baseband activity and suspectedness of baseband activities over time and displays this diagram on either the mobile device's screen or an external display device.

In a possible embodiment the evaluator component compiles the information on suspectedness of baseband activities over time in one single integrated graphical representation of the overall threat level in respect to the mobile device's baseband processor or in the form of a 'threat level thermometer' that is displayed on either the mobile device's screen or an external display device.

In a possible embodiment the evaluator component records baseband activity in a log file that can subsequently be read and combined with log files from other mobile devices by a centralized reporter component in order to arrive at an overview of the aggregated threat level to which multiple mobile devices are subject to.

In a possible embodiment the evaluator component transmits data on baseband activity and network parameters to a remote reporter entity which performs additional location-based analytics to determine the locations of hostile networks.

In a possible embodiment the reporter remote analytics entity sends out warnings and configuration changes to either all or only a selected subset of mobile devices in respect to detected hostile network activity (e.g. based on the mobile devices' location and the location of areas where over-the-air attacks heap up).

In a possible embodiment the reporter remote analytics entity sends out warnings about hostile network activity to dedicated connected devices which are mounted as stationary sensors in sensitive areas for the primary purpose of informing users who do not have the baseband monitor component installed on their mobile devices about ongoing suspicious/illegitimate activities.

In a possible embodiment mobile devices are connected to the centralized reporter monitoring component via a direct wireless data connection, or via a synchronization mechanism that is activated whenever the phone is connected to a desktop computer to synchronize data with it.

In a possible embodiment the central reporter component can adjust the behavior of the evaluator mechanism of mobile devices connected to the respective reporter component (e.g. by lowering the suspiciousness level before countermeasures are initiated, or initiating more extensive logging).

In a possible embodiment the defense component runs as an application on the application processor.

In the following an example will be discussed. If the baseband monitor component detects an ongoing call by monitoring the baseband processor, while at the same time, the application monitor component reports that the telephony software running on the application CPU has not initiated or accepted a call, then the evaluator mechanism will determine that the likelihood of malicious baseband behavior is high, and that this is very likely the result of an attack.

In an alternative embodiment the invention provides a method to analyze the security of a mobile terminal, comprising an application processor (AP), a baseband processor (BP), the AP and the BP exchange information. The method comprises the steps:
a) acquiring by a Baseband-monitor application and an Application-monitor application running on the mobile device one or more of the following information:
   - Information from the BP about opening and closing of transmission channels to and from a base station;
   - Information from the baseband CPU about protocol transmissions to and from the base station;
   - Information from the baseband CPU about the volume of data transmission;
   - Measurement data of response times to standard service requests from application CPU(AP) to baseband CPU (BP);
   - Information on the power consumption of phone components;
   - Information on the current voltage delivered by the battery to the phone;
   - Configuration of the audio path, to determine which component or application is using the micro-phone ;
   - Monitor the running applications on the AP;
   - Monitor the status of the running applications on the AP;
   - Monitor time or duration of applications running on the AP;
   - Monitor the input or output of the applications running on the AP;
   - Monitor the input of a user to a User-Interfaces.

The information is stored in a possible embodiment in a database or container which can be accessed by a correlation engine to find correlations between at least two pieces of information above that indicate an unsecure situation, and triggering an alarm.

In a possible embodiment the Baseband-monitor application acquires one or more of the following information:
- Information from the BP about opening and closing of transmission channels to and from a base station;
- Information from the baseband CPU about protocol transmissions to and from the base station;
- Information from the baseband CPU about the volume of data transmission;
- Measures response times to standard service requests from application CPU(AP) to baseband CPU (BP).

Furthermore the application monitor application acquires one or more of the following information:
- Information of the power consumption of phone components;
- Information of the current and voltage delivered by the battery to the phone;
- Monitors the audio path configuration, by determining which component or application is using the micro-phone;
- Monitor the running applications on the AP;
- Monitor the status of the running applications on the AP;
- Monitor time or duration of applications running on the AP;
- Monitor the input or output of the applications running on the AP;
- Monitor the input of a user to a User-Interface;

All these pieces of information are used to find a correlation between the information of the baseband-monitor application and the information of the application-monitor-application, that indicate an unsecure situation, and triggering an alarm.

In a possible embodiment a correlation is defined being likely secure for one or more of the following:
- if the user inputs information to a User-Interface and an application is running which is defined as the receiver of the information inputted, and network connection on the BP is opened after the inputted information;
- if a web-browser application is started or activated and user input is detected which is directed to the web-browser application and a IP-Session is opened by the BP;
- if an email-application is running and is checking for new emails and an IP-Session is opened by the BP;
- if a phone call application is started, user input is detected, and a voice session is opened by the BP;
- if a phone call application is started and has opened a voice connection over the BP a speaker path to the phone call application is allowed;
- if an instant messaging communication is initiated or received by the user and an IP-Session is opened by the BP;
- if software or system updates are initiated by the user or authorized system services, and an IP-Session is opened by the BP.

In a possible embodiment a correlation is defined being likely unsecure for one or more of the following:
- if a phone call is ongoing while no phone call is made or accepted by the phone call application or telephony application;
- if the microphone is active and a phone call is ongoing over the BP while no phone call is made accepted by the phone call application or telephony application ;
- if the microphone is assigned to an application that is not allowed to have access to the microphone and which transfers data over the BP as a phone call or a IP-Session;
- if the mobile device is an idle or sleep mode, while large amount of data from the storage device of the phone is transferred over a IP-session opened by the BP;
- if the actual power consumption is larger than the displayed power consumption and a IP-session is opened by the BP to transfer data;
- if the actual power differs from the expected power consumption and a IP-session or phone calls is ongoing over the BP.

In a possible embodiment a correlation engine defines and maintains pattern of secure and unsecure states is then matched against the currently present data by mathematical correlation methods, including but not limited to neural networks and statistical deviation analysis.

In a possible embodiment power consumption is analyzed by mathematical subtraction of the area under the curve for battery discharge and if the area of the expected discharge curve as computed on the base of application and operating system power usage deviates significantly from the actually measured discharge curve, the resulting area under the curve is large and an IP-session or phone call is ongoing over the BP an alarm is triggered.

In a possible embodiment a user setting is provided allowing the configuration of the sensitivity of the alarm and attack countermeasure routines, so the user is not overwhelmed by false alarms.

In a possible embodiment in case of the alarm the BP is reset, the mobile device is reset or all connections are forced to be dropped.

A further part of the invention is Mobile terminal comprising an application processor (AP), a baseband processor (BP), the AP and the BP exchange information, comprising a Baseband- monitor application and an Application-monitor application running on the AP or BP, the monitor applications are configured to collect one or more of the following information:
- Information from the BP about opening and closing of transmission channels to and from a base station;
- information from the baseband CPU about protocol transmissions to and from the base station;
- Information from the baseband CPU about the volume of data transmission;
- Measures response times to standard service requests from application CPU(AP) to baseband CPU (BP);
- Information of the power consumption of phone components;
- Information of the current and voltage delivered by the battery to the phone;
- Configuration of the audio path, to determine which component or application is using the micro-phone;
- Monitor the running applications on the AP;
- Monitor the status of the running applications on the AP;
- Monitor time or duration of applications running on the AP;
- Monitor the input or output of the applications running on the AP;
- Monitor the input of a user to a User-Interfaces;

further comprising a correlation application being configured to find correlations between at least two information above that indicate an unsecure situation, and triggering an alarm.

In a possible embodiment of the mobile terminal the Baseband- monitor application acquires one or more of the following information:
- Information from the BP about opening and closing of transmission channels to and from a base station;
- Information from the baseband CPU about protocol transmissions to and from the base station;
- Information from the baseband CPU about the volume of data transmission;
- Measures response times to standard service requests from application CPU(AP) to baseband CPU (BP);
and wherein the application monitor application acquires one or more of the following information :
- Information of the power consumption of phone components;
- Information of the current and voltage delivered by the battery to the phone;
- Monitors the audio path configuration, by determining which component or application is using the micro-phone;
- Monitor the running applications on the AP;
- Monitor the status of the running applications on the AP;
- Monitor time or duration of applications running on the AP;
- Monitor the input or output of the applications running on the AP;
- Monitor the input of a user to a User-Interface;
and the correlation application is configured to find correlation between the information of the baseband-monitor application and the information of the application-monitor-application, above that indicate an unsecure situation, and triggering an alarm.

In a possible embodiment of the mobile terminal a correlation is defined being likely secure for one or more of the following:
- if the user inputs information to a User-Interface and an application is running which is defined as the receiver of the information inputed, and network connection on the BP is opened after the inputted information;
- if a web-browser application is started or activated and user input is detected which is directed to the web-browser application and a IP-Session is opened by the BP;
- if a email-application is running and is checking for new emails and an IP-Session is opened by the BP;
- if a phone call application is started user input is detected and a voice session is opened by the BP;
- if a phone call application is started and has opened a voice connection over the BP an speaker path to the phone call application is allowed;
- if an instant messaging communication is initiated or received by the user and an IP-Session is opened by the BP;
- if software or system updates are initiated by the user or authorized system services, and an IP-Session is opened by the BP.

In a possible embodiment of the mobile terminal a correlation is defined being likely unsecure for one or more of the following:
- if a phone call is ongoing while no phone call is made or accepted by the phone call application or telephony application;
- if the microphone is active and a phone call is ongoing over the BP while no phone call is made accepted by the phone call application or telephony application ;
- if the microphone is assigned to an application that is not allowed to have access to the microphone and which transfers data over the BP as a phone call or a IP-Session;
- if the mobile device is an idle or sleep mode, while large amount of data from the storage device of the phone is transferred over a IP-session opened by the BP;
- if the actual power consumption is larger than the displayed power consumption and a IP-session is opened by the BP to transfer data;
- if the actual power differs from the expected power consumption and a IP-session or phone calls is ongoing over the BP:
   In a possible embodiment of the mobile terminal the correlation engine is configured to define and maintain pattern of secure and unsecure states, which are then matched against the currently present data by mathematical correlation methods, including but not limited to neural networks and statistical deviation analysis.

In a possible embodiment of the mobile terminal a Power consumption is analyzed by mathematical subtraction of the area under the curve for battery discharge and If the area of the expected discharge curve as computed on the base of application and operating system power usage deviates significantly from the actually measured discharge curve, the resulting area under the curve is large and a IP-session or phone calls is ongoing over the BP an alarm is triggred.

In a possible embodiment of the mobile terminal the correlation engine is configured to provide a user setting allowing the configuration of the sensitivity of the alarm and attack countermeasure routines, so the user is not overwhelmed by false alarms.
In a possible embodiment of the mobile terminal wherein in case of the alarm the BP is reset, the mobile device is reset or all connections are forced to be dropped.

Another aspect of the invention is a mobile device, that implements the above mentioned aspects. The Mobile device configured to detect an attack on a baseband processor comprising a baseband processor and an application processor, which may or may not be integrated in a single chip, comprising :
a) baseband monitor component configured to monitor the behavior of the baseband processor by using features available on the respective mobile device.
b) application monitor component configured to monitor the behavior of the application processor by keeping a record of the parameters, execution time or execution duration of legitimate software or user activities on the application processor that cause normal baseband activities as intended by the user;
c) evaluator component configured to correlate the baseband processor behavior with application processor behavior in order to distinguish between legitimate and suspicious/illegitimate baseband activities,
d) defense component configured to initiate component of countermeasures designed to ward off the suspicious/illegitimate baseband activities.

The other possible configurations of the mobile device which are described in the appended claims implement the method above.

It has to be noted, that the components mentioned above can be software or hardware, in case of software they run on the application processors or on the baseband processor or partially on both.
Also the applications can run on the BP or AP, or partially on the AP or BP, can be implemented in hardware or software or a combination thereof.

The invention consists in a possible configuration of the following components:
One component is a Baseband-Monitor that observes the behavior of the baseband. It uses all means available to determine the current behavior of the Baseband Processor (BP). The Baseband-Monitor is an application which preferable runs as application on the application processor (AP). It is also possible that parts of the Baseband-Monitor runs as application on the BP. Baseband-Monitor in the preferred embodiment uses the interfaces and functions the of the BP, which are provide by in the standard configuration. The information and the interfaces available differs depending on capabilities of the baseband processor and interfaces made available on a specific phone model/mobile terminal and includes but is not limited to:
   1. Information from the baseband CPU about opening and closing of transmission channels to and from a base station
   2. Information from the baseband CPU about protocol transmissions to and from the base station
   3. Information from the baseband CPU about the volume of data transmission
      Further the Baseband-Monitor
   4. Monitors and records the power consumption of phone components (as available)
   5. Records the current and voltage delivered by the battery to the phone.
   6. Monitors the audio path configuration (e.g. which component is using the microphone)
   7. Measures response times to normal service requests from application CPU(AP) to baseband CPU (BP)

Using these data points the Baseband-Monitor provides a rich set of information on the current activities of the baseband. The level of detail depends on the availability of data sources in the specific phone model. Not all data sources are usually available on all phone models.

The other component of the invention in the possible configuration of two components is a monitoring and alerting component that observes the parameters, time and duration of legitimate software and user activities on the application CPU that cause normal Baseband activities intended by the user. Under normal circumstances, most Baseband activities with some known exceptions are correlated with user interaction, like making a call or loading a web page, or known-to-be-good automated application activity, like checking e-mail. Application use of baseband ressources is monitored on the AP by various means like hooking or replacing the respective "provider" functions in the operating system that manage the communication with the baseband. This analyses can also be performed by checking the network traffic for example by sniffing the ports and the IP-packages, or by using proxies which are located between the applications and the baseband. Also the communication between the AP and BP can be monitored by reading the shared memory which is normally used for an information exchange between the two units. Also the activity for example the processor using of the applications can be monitored to detect if the application is very active or suspended. So the information of the process scheduler in the operating system can provide information. Also the event table of the operating system can be check and verified. In the event table the applications running on the AP give a feedback of the actions and errors and warnings.
Also a monitoring on the AP can be given by tracking the use of a user interface like a keyboard or a touch screen. For example if a SMS has been send by an application without a detection of a user input a security problem can be given. The same situation can be determined if the mobile terminal is in a standby mode and a SMS is sent or phone call is performed. The monitoring application on the AP collects this information and stores the Information over a defined time period in a database. The storing and collecting of the information is done in defined time intervals or driven by events like interrupts. Each collected Information has in a possible implementation a time stamp which allows finding a time correlation. Furthermore the information can be categorized which allows the implementation of general concepts and rules on the categories.

The mechanism then correlates the data from the Baseband monitoring (described above) and the data from the application CPU monitoring to distinguish between legitimate and suspicious Baseband activities. Suspicious are activities that cause transmissions or resource consumption on the Baseband but are not correlated to legitimate user activities.
One very simple example is that if the Baseband is detected by the monitoring component to have an active call ongoing while no phone call is made or accepted by the telephony software, very likely this is the result of an attack.

The correlation engine of the invention builds a pattern of "normality" that is then matched against the currently present data by mathematical correlation methods, including but not limited to neural networks and statistical deviation analysis etc. A simple example is the analysis of the battery discharge curve while taking into account the power usage of applications and sensors as provided by the operating system or seperate readout of power consumption data from respective phone sensors. If the actual discharge curve deviates from the expected precalculated discharge curve, malicious baseband activitiy is suspected. These statistical concepts are well known so that a further discussion can be omitted. Also logical dependencies can be expressed by definable expression, using conditional expression and logical conjunctions etc.. The detection of ongoing suspicious baseband activity can rely on one or a combination of data sources on Baseband and application CPU. Specific user usage patterns are taken into account by an adaption mechanism built into the correlation engine. A user setting is provided to allow for a configuration of the sensitivity of the alarm and attack countermeasure routines, so the user is not overwhelmed by false alarms.

In the most simple case when very little data is available to the Baseband Monitor, the battery current and voltage measurement is used to check for a deviation from the expected power consumption. An ongoing attack that would e.g. use the baseband to transmit room audio to the attacker by means of a surreptitious call or periodic data transmissions would cause a deviation between power consumption actually measured at the battery and the expected consumption computed from the phones power profile.

When suspicious activity is detected in the form of deviation between expected and actual power use, open channels to the base station, data transmission, audio circuit configuration, response times etc. countermeasures can be taken for instance but not limited to resetting the baseband, resetting the phone, forcing all connections to be dropped and / or alerting the phones user.

### Brief Description of Drawings

The Figures show examples of possible implementations but do not intend to limit the application on these embodiments. Consequently the scope of protection has to be determined by the broadest interpretation of the claims.
Fig. 1 shows a structure of components and their connection;
Fig. 2 shows the flow diagram of the method AP monitor application;
Fig. 3 shows the flow diagram of the method BP monitor application;
Fig. 4 shows the flow diagram of the method correlation engine;

### Detailed Description of Embodiments

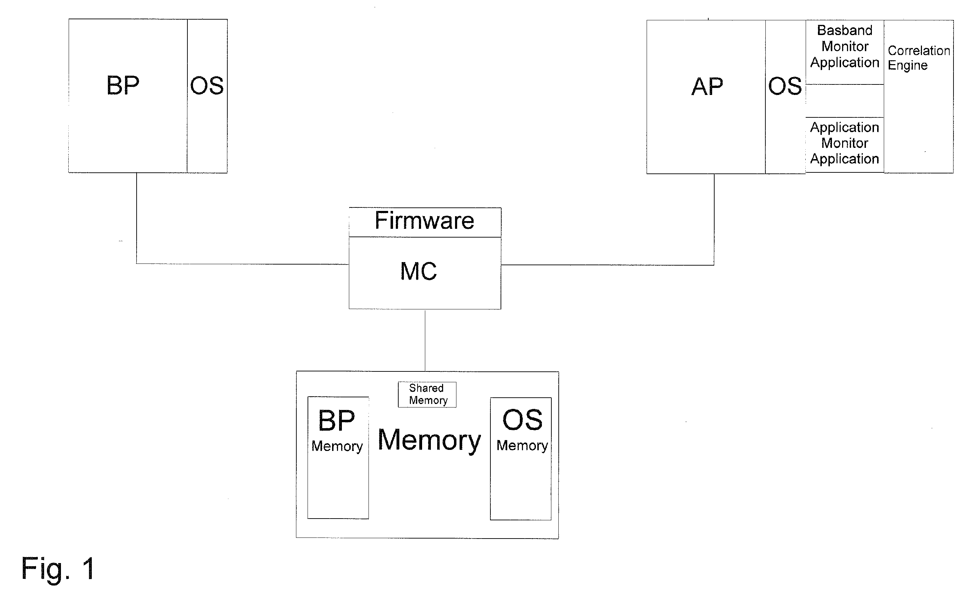

Fig. 1 discloses a structure of a mobile device with a BP running an operating system OS and with an AP running an OS. On the OS of the AP an application monitor application is running which implements the collection of information. Furthermore the baseband monitor application is running on the AP collecting information. The information are used by a correlation engine application which has access to the collected information. A memory controller MC is controlled by a firmware / program. The MC is connected to the memory and controls a memory that is logical divided into shared memory, AP memory and BP memory. The logical separation is provided by the memory controller and the firmware. The memory controller is connected to the BP and AP.

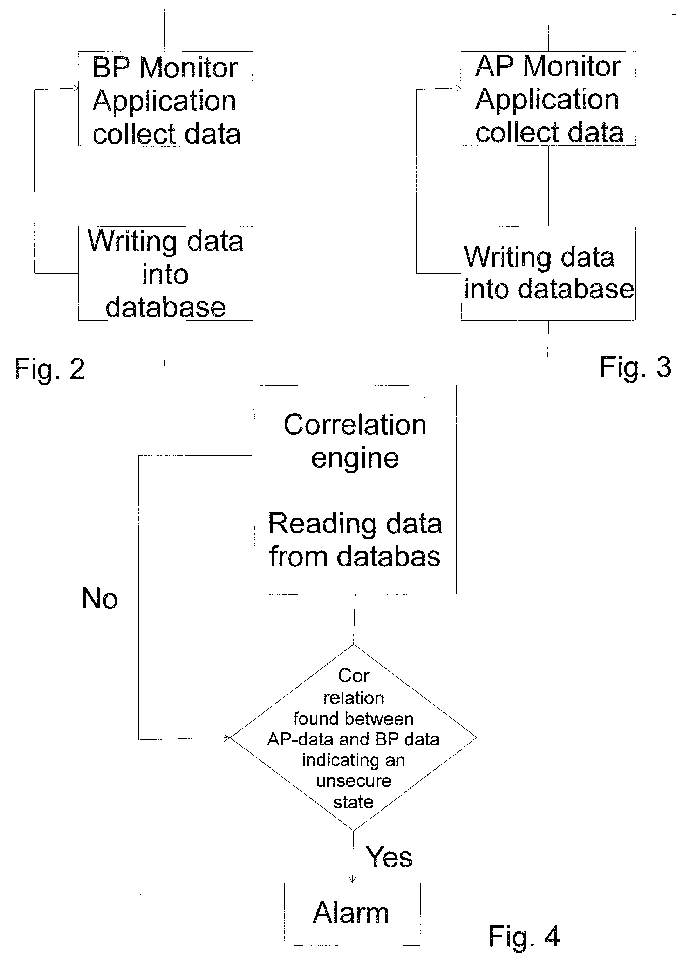

Fig. 2 shows a flow diagram of the application monitor that collects specific data and stores the date in a database. The data can be collected cyclic or event driven. Fig.3 shows a flow diagram of the baseband monitor application that collects specific data and stores the date in a database. The data can be collected cyclic or event driven. Fig. 4 shows a flow diagram of the correlation that has access to the database and reads the information to find unsecure patterns by finding the unsecure correlation. In case of finding a unsecure correlation an alarm is triggered.

## Claims

1. Method for detecting an attack on a baseband processor of a mobile device, being a mobile phone with cellular network connectivity, which comprises the baseband processor and an application processor, which may or may not be integrated in a single chip, wherein the baseband processor manages all radio functions of the mobile device, and the baseband processor and the application processor communicate and exchange information caused by the applications running on the application processor, wherein the mobile device, comprises a baseband monitor component, an application monitor component, an evaluator component, a defense component, the method comprises the steps:
a) monitoring by the baseband monitor component the behavior of the baseband processor by using features available on the respective mobile device,
b) monitoring by the application monitor component the behavior of the application processor by keeping a record of the parameters, execution time or execution duration of legitimate software or user activities on the application processor that cause normal baseband activities as intended by the user;
c) correlating by the evaluator component the baseband processor behavior with application processor behavior in order to distinguish between legitimate and suspicious/illegitimate baseband activities,
d) initiation by the defense component of countermeasures designed to ward off the suspicious/illegitimate baseband activities;
wherein the monitoring by the baseband monitor comprises one or more of the following:
- collecting information on audio path configuration,
- collecting information on the response time to normal service requests from the application processor to the baseband processor;
- collecting information obtained from the baseband processor's debugging output;
and/or
wherein the evaluator component flags the presence of a rogue base station that does not belong to the legitimate mobile network and the defense component warning the mobile device's user that a rogue base station (a so-called "IMSI catcher") has been detected and/or the defense component shutting down the baseband processor in order to prevent exploitation,
and preferably wherein the evaluator component flags the presence of a rogue base station that does not belong to the legitimate mobile network using one or more of the following information:
- cell identification, distance, and signal strength,
- signal growth/attenuation,
- forced network change from 3G to 2G network,
- unusual changes in the list of neighboring cells,
- unusual configuration parameters of the mobile base -station designed to make it appear more 'attractive' to the targeted mobile device(s),
- network parameters not consistent with the mobile device's location and/or the currently selected mobile network operator

2. The method according to claim 1, wherein the initiation of countermeasures designed to ward off the suspicious/illegitimate baseband activities comprises one or more of the following: resetting the baseband processor, resetting the phone, forcing all connections to be dropped.

3. The method according to claim 1 or 2, wherein the monitoring by the baseband monitor comprises one or more of the following:
- collecting information on power consumption of individual hardware components of the mobile device, and preferably wherein the monitoring of communication interfaces or memory areas shared between application processor and baseband processor for patterns associated with exploit attempts, comprises one or more of the following:
- Monitoring malformated messages or data structures or very large data blocks;
- Monitoring the usage of procedures, functions, features or messages not seen in normal operations;
- Monitoring attempts to access memory areas not consistent with normal operations,
and preferably wherein the collecting of information obtained from the baseband processor's debugging output comprises one or more of the following:
timing and volume of voice call setup,
timing and volume of data transmission,
timing and volume of SMS message transmission,
timing and sequence of establishment of traffic channels.

4. Method according to any of the claims 1 to 3, wherein the evaluator component flags the absence of standard A5/1, A5/2, or A5/3 link encryption on GSM or 3G/UMTS/W-CDMA mobile networks which leads the defense component to issue a warning to the mobile device's user that link encryption has been deactivated.

5. Method according to any of the claims 1 to 4, wherein the evaluator component categorizes activities on the baseband processor in different classes ranging from normal/inconspicious to highly suspicious, and preferably wherein the evaluator is plotting all the events in a diagram that shows baseband activity and suspectedness of baseband activities over time and that is displayed on either the mobile device's screen or an external display device,
and preferably,
wherein the evaluator component compiles the information on suspectedness of baseband activities overtime in one single integrated graphical representation of the overall threat level in respect to the mobile device's baseband processor or in the form of a 'threat level thermometer' that is displayed on either the mobile device's screen or an external display device.

6. Method according to any of the claims 1 to 5, wherein the evaluator component records baseband activity in a log file that can subsequently be read and combined with log files from other mobile devices by the reporter component in order to arrive at an overview of the aggregated threat level to which multiple mobile devices are subject to.

7. Method according to any of the claims 1 to 6, wherein the evaluator component transmits data on baseband activity and network parameters to a remote reporter entity which performs additional location-based analytics to determine the locations of hostile networks,
and preferably
wherein the remote reporter analytics entity sends out warnings and configuration changes to mobile devices in respect to detected hostile network activity,
and preferably wherein the remote reporter analytics entity sends out warnings about hostile network activity to dedicated connected devices which are mounted as stationary sensors in sensitive areas for the primary purpose of informing users who do not have the baseband monitor component installed on their mobile devices about ongoing suspicious/illegitimate activities.

8. Mobile device being a mobile phone with cellular network connectivity configured to detect an attack on a baseband processor comprising a baseband processor and an application processor, which may or may not be integrated in a single chip, wherein the baseband processor is configured to manage all radio functions of the mobile device, and the baseband processor and the application processor are configured to communicate and exchange information caused by the applications running on the application processor comprising:
a) baseband monitor component configured to monitor the behavior of the baseband processor by using features available on the respective mobile device,
b) application monitor component configured to monitor the behavior of the application processor by keeping a record of the parameters, execution time or execution duration of legitimate software or user activities on the application processor that cause normal baseband activities as intended by the user;
c) evaluator component configured to correlate the baseband processor behavior with application processor behavior in order to distinguish between legitimate and suspicious/illegitimate baseband activities,
d) defense component configured to initiate component of countermeasures designed to ward off the suspicious/illegitimate baseband activities;
wherein the baseband monitor component is configured to implement one or more of the following:
- collecting information on audio path configuration,
- collecting information on a response time to normal service requests from the application processor to the baseband processor;
- collecting information obtained from the baseband processor's debugging output;
and/or
wherein the evaluator component is configured to flag presence of a rogue base station that does not belong to the legitimate mobile network and the defense component warning the mobile device's user that a rogue base station, a so-called "IMSI catcher, has been detected and/or the defense component shutting down the baseband processor in order to prevent exploitation;
and preferably wherein
the evaluator component is configured to flag the presence of a rogue base station that does not belong to the legitimate mobile network using one or more of the following information:
- cell identification, distance, and signal strength,
- signal growth/attenuation,
- forced network change from 3G to 2G network,
- unusual changes in the list of neighboring cells,
- unusual configuration parameters of the mobile base -station designed to make it appear more 'attractive' to the targeted mobile device(s),
- network parameters not consistent with the mobile device's location and/or the currently selected mobile network operator.

9. Mobile device according to claim 8, wherein the defense component is configured to initiate countermeasures designed to ward off the suspicious/illegitimate baseband activities comprises one or more of the following: resetting the baseband processor, resetting the phone, forcing all connections to be dropped.

10. Mobile device according to claim 8 or 9, wherein the baseband monitor component is configured to implement one or more of the following:
- collecting information on power consumption of individual hardware components of the mobile device, and preferably
wherein the monitoring of communication interfaces or memory areas shared between application processor and baseband for patterns associated with exploit attempts, comprises one or more of the following:
- Monitoring malformated messages or data structures or very large data blocks;
- Monitoring the usage of procedures, functions, features or messages not seen in normal operations;
- Monitoring attempts to access memory areas not consistent with normal operations;
and preferably wherein the collecting of information obtained from the baseband processor's debugging output comprises one or more of the following:
timing and volume of voice call setup,
timing and volume of data transmission,
timing and volume of SMS message transmission,
timing and sequence of establishment of traffic channels.

11. Mobile device according to any of the claims 8 to 10, wherein the evaluator component is configured to flag the absence of standard A5/1, A5/2, or A5/3 link encryption on GSM or 3G/UMTS/W-CDMA mobile networks which leads the defense component to issue a warning to the mobile device's user that link encryption has been deactivated.

12. Mobile device according to any of the claims 8 to 11, wherein the evaluator component is configured to categorizes activities on the baseband processor in different classes ranging from normal/inconspicious to highly suspicious,
and preferably wherein the evaluator is configured to plot all the events in a diagram that shows baseband activity and suspectedness of baseband activities overtime and that is displayed on either the mobile device's screen or an external display device,
and preferably wherein the evaluator component is configured to compile the information on suspectedness of baseband activities over time in one single integrated graphical representation of the overall threat level in respect to the mobile device's baseband processor or in the form of a 'threat level thermometer' that is displayed on either the mobile device's screen or an external display device.

13. Mobile device according to any of the claims 8 to 12, wherein the evaluator component is configured to record baseband activity in a log file that can subsequently be read and combined with log files from other mobile devices by the reporter component in order to arrive at an overview of the aggregated threat level to which multiple mobile devices are subject to.

14. Mobile device according to any of the claims 8 to 13, wherein the evaluator component is configured to transmit data on baseband activity and network parameters to a remote reporter entity which performs additional location-based analytics to determine the locations of hostile networks.
and preferably wherein the remote reporter analytics entity is configured to send out warnings and configuration changes to mobile devices in respect to detected hostile network activity,
and preferably wherein the remote reporter analytics entity is configured to send out warnings about hostile network activity to dedicated connected devices which are mounted as stationary sensors in sensitive areas for the primary purpose of informing users who do not have the baseband monitor component installed on their mobile devices about ongoing suspicious/illegitimate activities.

## Patentansprüche

1. Verfahren zum Erkennen eines Angriffs auf einen Basisbandprozessor einer mobilen Vorrichtung, die ein Mobiltelefon mit zellularer Netzwerkverbindung ist, die den Basisbandprozessor und einen Anwendungsprozessor umfasst, die in einen Einzelchip integriert werden kann oder auch nicht, wobei der Basisbandprozessor für alle Funkfunktionen der mobilen Vorrichtung zuständig ist, und der Basisbandprozessor und der Anwendungsprozessor kommuniziert und tauscht Informationen aus, die durch die Anwendungen die auf dem Anwendungsprozessor laufen, erzeugt werden, wobei die mobile Vorrichtung eine Basisband-Monitorkomponente, eine Anwendungs- Monitorkomponente, eine BeurteilungsKomponente, eine Abwehr- Komponente umfasst, das Verfahren umfasst die Schritte:
a) Überwachung des Verhaltens des Basisbandprozessors durch die Basisband-Monitorkomponente unter Einsatz von Merkmalen, die auf der jeweiligen mobilen Vorrichtung verfügbar sind,
b) Überwachung des Verhaltens des Anwendungsprozessors durch die Anwendungs- Monitorkomponente, durch Aufbewahrung einer Aufzeichnungen der Parameter, der Ausführungszeit oder Ausführungsdauer von zulässiger Software oder Benutzeraktivitäten auf dem Anwendungsprozessor, die normale Basisband-Aktivitäten erzeugt, wie vom Benutzer beabsichtigt;
c) Korrelieren des Verhaltens des Basisbandprozessors durch die Beurteilungskomponente mit dem Verhalten des Anwendungsprozessors, um zwischen zulässiger und unzulässiger Basisband- Aktivitäten zu unterscheiden,
d) Einleitung durch die Abwehrkomponente für Gegenmaßnahmen konzipiert zum Abwehren der unzulässiger Basisband- Aktivitäten;
wobei die Überwachung durch den Basisband- Monitor einen oder mehrere der Folgenden umfasst:
- Sammeln von Informationen über Audiopfad- Konfiguration,
- Sammeln von Informationen über die Reaktionszeit bei normalen Service-Anfragen von dem Anwendungsprozessor zu dem Basisbandprozessor;
- Sammeln von Informationen erhalten von der Debugging- Ausgabe des Basisbandprozessors;
und / oder
wobei die Beurteilungskomponente das Vorhandensein einer unzulässigen Basisstation kennzeichnet, die nicht dem zulässigen Mobilfunknetz angehört, und die Abwehrkomponente warnt den Benutzer der mobilen Vorrichtung, dass eine unzulässige Basisstation (ein sogenannter "IMSI- Catcher") erkannt worden ist und / oder die Abwehrkomponente den Basisbandprozessor herunterfährt, um die Nutzung zu verhindern,
und vorzugsweise wobei die Beurteilungskomponente das Vorhandensein einer unzulässigen Basisstation, die nicht dem legitimierten Mobilfunknetz angehört, kennzeichnet, indem eine oder mehrere der folgenden Informationen genutzt werden:
- Zellenidentifikation, Entfernung und Signalstärke,
- Signalentwicklung / Dämpfung,
- forcierte Netzwerkänderung von 3G zu 2G Netzwerk,
- unübliche Änderungen in der Liste von benachbarten Zellen,
- unübliche Konfigurationsparameter der mobilen Basisstation konzipiert um es zu der /den zielgerichteten mobilen Vorrichtung(en) "attraktiver" erscheinen zu lassen,
- Netzwerk- Parameter nicht gleichbleibend mit dem Standort der mobilen Vorrichtung und / oder dem aktuell ausgewählten Mobilfunknetzbetreiber.

2. Das Verfahren nach Anspruch 1, wobei die Einleitung von Gegenmaßnahmen, konzipiert zur Abwehr der verdächtigen / unzulässigen Basisband- Aktivitäten einen oder mehrere des Folgenden umfasst: Zurücksetzen der Basisbandprozessors, Zurücksetzen des Telefons, Erzwingen, dass alle Verbindungen getrennt werden.

3. Das Verfahren nach Anspruch 1 oder 2, wobei die Überwachung durch den Basisband- Monitor ein oder mehrere des Folgenden umfasst:
- Sammeln von Informationen über den Stromverbrauch von individuellen Hardwarekomponenten der mobilen Vorrichtung,
und wobei vorzugsweise die Überwachung von Kommunikationsschnittstellen oder Speicherbereichen, geteilt zwischen Anwendungsprozessor und BasisbandProzessor nach Mustern, verbunden mit Exploid- Versuchen, eines oder mehrere des Folgenden, umfasst:
- Überwachung speziell umformatierter Nachrichten oder Datenstrukturen oder sehr großer Datenblöcke;
- Überwachung der Verwendung von Prozeduren, Funktionen, Eigenschaften oder Nachrichten, die nicht im Normalbetrieb erkannt werden;
- Überwachung von Zugriffsversuche auf Speicherbereiche, die nicht im mit Normalbetrieb übereinstimmen;
und wobei vorzugsweise das Sammeln von Informationen, erhalten von der Debugging- Ausgabe des Basisbandprozessors eines oder mehrere des Folgenden, umfasst:
Zeitpunkt und Volumen des Sprachanruf- Aufbaus,
Zeitpunkt und Volumen von Datenübertragung,
Zeitpunkt und Volumen von SMS- Nachrichtenübertragung,
Zeitpunkt und Sequenz der Einrichtung von Verkehrskanälen.

4. Verfahren nach einem der Ansprüche 1 bis 3, wobei die Beurteilungskomponente das Fehlen von Standard A5/1, A5/2 oder A5/3- Link- Verschlüsselung auf GSM oder 3G/UMTS/W- CDMA- Mobilfunknetzen kennzeichnet, welche die Abwehrkomponente steuert, um eine Warnung an den Benutzer der mobilen Vorrichtung auszugeben, dass die Link- Verschlüsselung deaktiviert wurde.

5. Verfahren nach einem der Ansprüche 1 bis 4, wobei die Beurteilungskomponente Aktivitäten auf dem Basisbandprozessor in verschiedenen Klassen von normal / unauffällig zu höchst verdächtig, kategorisiert,
und wobei vorzugsweise die Beurteilungskomponente alle Ereignisse grafisch in einem Diagramm darstellt, das die Basisband- Aktivität und die verdächtigen Basisband- Aktivitäten im Laufe der Zeit zeigt, und das entweder auf dem Bildschirm der mobilen Vorrichtung oder einer externen Anzeigevorrichtung angezeigt wird, und vorzugsweise
wobei die Beurteilungskomponente die Informationen in Bezug auf verdächtige Basisband- Aktivitäten im Laufe der Zeit in einer einzigen integrierten, grafischen Darstellung des allgemeinen Bedrohungsgrads in Bezug auf den Basisbandprozessor der mobilen Vorrichtung oder in der Form eines "Bedrohungsgrad- Thermometer", der entweder auf dem Bildschirm der mobilen Vorrichtung oder einer externen Anzeigevorrichtung angezeigt wird, zu sammeln.

6. Verfahren nach einem der Ansprüche 1 bis 5, wobei die Beurteilungskomponente Basisband- Aktivität in einer Protokolldatei aufnimmt, die anschließend mit Protokolldateien von anderen mobilen Vorrichtungen durch die Reporterkomponente ausgelesen und kombiniert werden kann, um zu einem Überblick des aggregierten Bedrohungsgrads zu kommen, dem mehrere mobile Vorrichtungen unterliegen.

7. Verfahren nach einem der Ansprüche 1 bis 6, wobei die Beurteilungskomponente Daten zu Basisband- Aktivität und Netzwerkparameter an eine entfernte Reporter-Einheit übermittelt, die weitere Standort- basierte- Analyse durchführt, um die Standorte von feindlichen Netzwerken zu bestimmen,
und vorzugsweise
wobei die entfernte Reporter- Analytik- Einheit Warnungen und Konfigurationsänderungen an der mobilen Vorrichtungen in Bezug auf erkannte feindliche Netzwerkaktivität sendet,
und wobei vorzugsweise die entfernte Reporter- Analytik- Einheit Warnungen über feindliche Netzwerkaktivität an bestimmte verbundene Vorrichtungen sendet, die in sensiblen Bereichen als stationäre Sensoren mit den primären Zweck angeordnet sind, Information für Nutzer, die nicht über eine installierte Basisband-Überwachungskomponente auf ihrer mobilen Vorrichtungen verfügen, über laufende verdächtige /unzulässige Aktivitäten bereitzustellen.

8. Mobile Vorrichtung, die ein Mobiltelefon mit zellularer Netzwerkverbindung ist, konfiguriert, um einen Angriff auf einen Basisbandprozessor zu erkennen, umfassend einen Basisbandprozessor und einen Anwendungsprozessor, die in einen Einzelchip integriert sein können oder auch nicht, wobei der Basisbandprozessor konfiguriert ist, um alle Funkfunktionen der mobilen Vorrichtung zu verwalten, und der Basisbandprozessor und der Anwendungsprozessor sind konfiguriert, um zu kommunizieren und Informationen auszutauschen, die durch die Anwendungen, die auf dem Anwendungsprozessor laufen, erzeugt werden, umfassend:
a) eine Basisband- Monitorkomponente konfiguriert, um das Verhalten des Basisbandprozessor unter Verwendung von Eigenschaft, die auf der jeweiligen mobilen verfügbar sind, zu überwachen,
b) eine Anwendungsmonitor- Komponente konfiguriert, um das Verhalten des Anwendungsprozessors durch Aufbewahrung einer Aufzeichnungen der Parameter, der Ausführungszeit oder Ausführungsdauer von zulässiger Software oder Benutzeraktivitäten auf dem Anwendungsprozessor, die normale Basisband-Aktivitäten erzeugt, wie vom Benutzer beabsichtigt, zu überwachen;
c) eine Beurteilungskomponente konfiguriert, um das Verhalten des Basisbandprozessors mit dem Verhalten des Anwendungsprozessors zu korrelieren, um zwischen zulässigen und verdächtigen / unzulässigen Basisband- Aktivitäten zu unterscheiden,
d) eine Abwehrkomponente konfiguriert, um eine Komponenten von Gegenmaßnahmen zu starten, zum Abwehren der verdächtigen / unzulässigen Basisband- Aktivitäten;
wobei die Basisband- Monitorkomponente konfiguriert ist, um einen oder mehrere der des Folgenden, zu implementieren:
- Sammeln von Informationen über eine Audiopfad- Konfiguration,
- Sammeln von Informationen über ein Reaktionszeit bei normalen Service-Anfragen von dem Anwendungsprozessor an dem Basisbandprozessor;
- Sammeln von Informationen erhalten von der Debugging- Ausgabe des Basisbandprozessors;
und/oder
wobei die Beurteilungskomponente konfiguriert ist, um das Vorhandensein einer fehlerhaften Basisstation, die nicht dem zulässigen Mobilfunknetz angehört, zu kennzeichnen, und die Abwehrkomponente warnt den Benutzer der mobilen Vorrichtung, dass eine unzulässige Basisstation, ein sogenannter "IMSI- Catcher", erkannt worden ist und / oder die Abwehrkomponente den Basisbandprozessor herunterfährt, um die Nutzung zu verhindern,
und
wobei vorzugsweise die Beurteilungskomponente konfiguriert ist, um das Vorhandensein einer unzulässigen Basisstation, die nicht dem zulässigen Mobilfunknetz angehört, zu kennzeichnen, unter Nutzung einer oder mehrere der folgenden Informationen:
- Zellenidentifikation, Entfernung und Signalstärke,
- Signalentwicklung / Dämpfung,
- forcierte Netzwerkänderung von 3G zu 2G Netzwerk,
- unübliche Änderungen in der Liste von benachbarten Zellen,
- unübliche Konfigurationsparameter der mobilen Basisstation ausgebildet, um diese
für die mobilen Ziel- Vorrichtung(en) "attraktiver" erscheinen zu lassen,
- Netzwerk- Parameter, die nicht konsistent sind mit dem Standort der mobilen Vorrichtung und / oder dem aktuell ausgewählten Mobilfunknetzbetreiber.

9. Mobile Vorrichtung nach Anspruch 8, wobei die Abwehrkomponente konfiguriert ist, um Gegenmaßnahmen ausgebildet zur Abwehr der verdächtigen / unzulässigen Basisband- Aktivitäten einzuleiten, umfassend einen oder mehrere der Folgenden: Zurücksetzen des Basisbandprozessors, Zurücksetzen des Telefons, das Trennen aller Verbindungen erzwingen.

10. Mobile Vorrichtung nach Anspruch 8 oder 9, wobei die Basisband-Monitorkomponente konfiguriert ist, um eines oder mehreres der Folgenden zu implementieren:
- Sammeln von Informationen über den Stromverbrauch von individuellen Hardwarekomponenten der mobilen Vorrichtung,
und vorzugsweise
wobei die Überwachung von Kommunikationsschnittstellen oder Speicherbereichen, geteilt zwischen Anwendungsprozessor und Basisband für Vorlagen, verbunden mit Exploid- Versuchen, eines oder mehrere des Folgenden, umfasst:
- Überwachung speziell umformatierter Nachrichten oder Datenstrukturen oder sehr großer Datenblöcke;
- Überwachung der Verwendung von Prozeduren, Funktionen, Eigenschaften oder Nachrichten, die nicht im Normalbetrieb erkannt werden;
- Überwachung von Zugriffsversuche auf Speicherbereiche, die nicht im mit Normalbetrieb übereinstimmen;
und wobei vorzugsweise das Sammeln von Informationen, erhalten von der Debugging- Ausgabe des Basisbandprozessors eines oder mehrere des Folgenden, umfasst:
Zeitpunkt und Volumen des Sprachanruf- Aufbaus,
Zeitpunkt und Volumen von Datenübertragung,
Zeitpunkt und Volumen von SMS- Nachrichtenübertragung,
Zeitpunkt und Sequenz der Einrichtung von Verkehrskanälen.

11. Mobile Vorrichtung nach einem der Ansprüche 8 bis 10, wobei die Beurteilungskomponente konfiguriert ist, um das Fehlen von Standard A5/1, A5/2 oder A5/3- Link- Verschlüsselung auf GSM oder 3G/UMTS/W- CDMA-Mobilfunknetzen zu kennzeichnen, welche die Abwehrkomponente steuert, um eine Warnung an den Benutzer der mobilen Vorrichtung auszugeben, dass die Link-Verschlüsselung deaktiviert wurde.

12. Mobile Vorrichtung nach einem der Ansprüche 8 bis 11, wobei die Beurteilungskomponente konfiguriert ist, um Aktivitäten auf dem Basisbandprozessor in verschiedenen Klassen von normal /unauffällig zu höchst verdächtig, zu kategorisieren,
und wobei vorzugsweise der Beurteiler konfiguriert ist, um Ereignisse grafisch in einem Diagramm darzustellen, das die Basisband- Aktivität und die verdächtigen Basisband- Aktivitäten im Laufe der Zeit zeigt, und das entweder auf dem Bildschirm der mobilen Vorrichtung oder einer externen Anzeigevorrichtung angezeigt wird, und vorzugsweise,
und wobei vorzugsweise die Beurteilungskomponente konfiguriert ist, um Informationen auf verdächtige Basisband- Aktivitäten im Laufe der Zeit in einer einzigen integrierten, grafischen Darstellung des allgemeinen Bedrohungsgrads in Bezug auf den Basisbandprozessor der mobilen Vorrichtung oder in der Form eines "Bedrohungsgrad-Thermometer", der entweder auf dem Bildschirm der mobilen Vorrichtung oder einer externen Anzeigevorrichtung angezeigt wird, zu sammeln.

13. Mobile Vorrichtung nach einem der Ansprüche 8 bis 12, wobei die Beurteilungskomponente konfiguriert ist, um Basisband- Aktivität in einer Protokolldatei aufzunehmen, die anschließend mit Protokolldateien von anderen mobilen Vorrichtungen durch die Reporterkomponente ausgelesen und kombiniert werden kann, um zu einem Überblick des aggregierten Bedrohungsgrads zu kommen, dem mehrere mobile Vorrichtungen unterliegen.

14. Mobile Vorrichtung nach einem der Ansprüche 8 bis 13, wobei die Beurteilungskomponente konfiguriert ist, um Daten zur Basisband-Aktivität und Netzwerkparameter an eine entfernte Reporter- Einheit zu übermitteln, die weitere Standort- basierte- Analyse durchführt, um die Standorte von feindlichen Netzwerken zu bestimmen,
und vorzugsweise
wobei die entfernte Reporter- Analytik- Einheit konfiguriert ist, um Warnungen und Konfigurationsänderungen an der mobilen Vorrichtungen in Bezug auf erkannte feindliche Netzwerkaktivität zu senden,
und wobei vorzugsweise die entfernte Reporter- Analytik- Einheit konfiguriert ist, um Warnungen über feindliche Netzwerkaktivität an bestimmte verbundene Vorrichtungen zu senden, die in sensiblen Bereichen als stationäre Sensoren mit den primären Zweck angeordnet sind, Information für Nutzer, die nicht über eine installierte Basisband- Überwachungskomponente auf ihrer mobilen Vorrichtungen verfügen, über laufende verdächtige /unzulässige Aktivitäten bereitzustellen.

## Revendications

1. Une méthode de détection d'une attaque sur un procédé en bande de base d'un dispositif mobile, lequel est un téléphone mobile avec une connectivité à un réseau cellulaire, comprenant le processeur de bande de base et un processeur applicatif, pouvant être ou ne pas être intégré au sein d'un même semi-conducteur, dans lequel le processeur de bande de base gère toutes les fonctions radio du dispositif mobile et le processeur de bande de base et le processeur applicatif communiquent et échangent de l'information générées par les applications tournant sur le processeur applicatif, dans lequel le dispositif mobile comporte un composant de surveillance de bande de base, un composant de surveillance d'application, un composant d'évaluation, un composant de défense, la méthode comprenant les étapes :
a) la surveillance par le composant de surveillance de bande de base du comportement du processeur de bande de base au moyens de moyens disponibles sur le dispositif mobile respectif,
b) la surveillance par le composant de surveillance d'application du comportement du processeur applicatif par la tenue d'un suivi des paramètres, du temps d'exécution ou de la durée d'exécution de programmes légitimes ou d'activités utilisateurs sur le processeur applicatif provoquant des activités de bande de base normale, telle qu'attendues par l'utilisateur ;
c) la corrélation par le composant d'évaluation du comportant du processeur de bande de base avec le comportement du processeur applicatif dans le but de distinguer les activités de bande de base normales et suspectes/anormales,
d) le lancement par le composant de défense de contre-actions destinées à contre-carrer les activités de base de bande suspectes/anormales ;
dans laquelle la surveillance par le composant de surveillance de bande de base comporte une ou plusieurs des actions :
- la collecte d'information sur la configuration de chemin audio,
- la collecte d'information sur le temps de réponse aux requêtes de services normales émanant du processeur applicatif à l'attention du processeur de bande de base,
- la collecte d'information obtenue de la sortie de débuggage du processeur de bande de base ;
et/ou
dans laquelle le composant d'évaluation marque la présence d'une station de base suspecte n'appartenant pas au réseau mobile légitime et le composant de défense attirant l'attention de l'utilisateur du dispositif mobile qu'une station de base suspecte (désignée « IMSI catcher ») a été détectée et/ou le composant de défense éteignant le processeur de bande de base pour empêcher son utilisation,
et de préférence dans laquelle le composant d'évaluation marque la présence d'une station de base suspecte n'appartenant pas au réseau mobile légitime en utilisant une ou plusieurs des informations suivantes :
- identification de cellule, distance, et force du signal,
- croissance/atténuation du signal
- changement de mode forcé de réseau 3G à réseau 2G ;
- changements non courants dans la liste des cellules voisines ;
- paramètres de configuration non courants de la station de base de mobile conçues pour apparaître plus « attractive » pour les dispositifs mobiles cibles ;
- des paramètres réseaux incohérents avec la localisation du dispositif mobile et/ou le réseau d'opérateur mobile couramment sélectionné.

2. La méthode selon la revendication 1, dans laquelle le lancement des contre-actions destinées à contre-carrer les activités de base de bande suspectes/anormales comporte une ou plusieurs des actions suivantes :
le redémarrage du processeur de bande de base, le redémarrage du téléphone, l'abandon forcé de toutes les connexions.

3. La méthode selon la revendication 1 ou 2, dans laquelle le suivi par le composant de surveillance de bande de base comporte une ou plusieurs des actions suivantes :
- la collecte d'information sur la consommation de courant des composants matériels individuels du dispositif mobile,
et de préférence dans laquelle la surveillance des interfaces de communication ou des zones mémoires partagées entre le processeur applicatif et le processeur de bande de base pour des motifs associés à des tentatives d'utilisation , comporte une ou plusieurs des actions suivantes :
- le suivi des messages, des structures de données ou de grands blocs de données incorrectement formatés ;
- le suivi de l'utilisation des procédures, des fonctions, des éléments ou des messages non vues durant une utilisation normale ;
- le suivi des tentatives d'accès aux zones mémoires non cohérentes avec les opérations normales,
et de préférence, dans laquelle la collecte d'information obtenue de la sortie de déboggage du processeur de bande de base comporte une ou plusieurs des actions suivantes :
- le séquencement et le volume de l'établissement des appels vocaux ;
- le séquencemen tet le volume de la transmission de données,
- le séquencement et le volume de la transmission de message SMS,
- le séquencement et le volume de l'établissement des canaux de traffic.

4. La méthode selon l'une quelconque des revendications 1 à 3, dans laquelle le composant d'évaluation marque l'absence de chiffrage de canal standard A5/1, A5/2 ou A5/3 sur les réseaux mobiles GSM ou 3G/UMTS/W-CDMA amenant le composant de défense à générer une alerte à l'utilisateur du dispositif mobile pour l'informer de la désactivation du chiffrage de canal.

5. La méthode selon l'une quelconque des revendications 1 à 4, dans laquelle le composant d'évaluation catégorise les activités sur le processeur de bande de base en différentes classes se déclinant de normal/non suspecte jusqu'à hautement suspecte et , de préférence, dans laquelle le composant d'évaluation trace tous les événements dans un diagramme montrant l'activité de bande de base et le caractère suspect des activités de bande de base dans le temps et qui sont affichés soit sur l'écran du dispositif mobile ou sur un écran d'affichage externe,
et de préférence,
dans laquelle le composant d'évaluation compile l'information sur les activités de bande de base suspectes dans le temps au sein d'une unique représentation graphique intégrée pour le niveau de menace global par rapport au processeur de bande de base du dispositif mobile ou dans la forme d'un « thermomètre de niveau de menace » qui est affiché soit sur l'écran du dispositif mobile ou sur un écran d'affichage externe.

6. Méthode selon l'une quelconque des revendications 1 à 5, dans laquelle le composant d'évaluation enregistre l'activité de bande de base dans un fichier de suivi qui peut être ultérieurement lu et combiné avec des fichiers de suivi d'autres dispositifs mobile par l'agent de rapport afin de parvenir à une vue d'ensemble du niveau de menace agrégé auquel une multiplicité de dispositifs mobiles sont exposés.

7. La méthode selon l'une quelconque des revendications 1 à 6, dans laquelle le composant d'évaluation transmet des données sur l'activité de bande de base et sur les paramètres réseau à un agent de rapport distant réalise des statistiques basées sur la localisation pour déterminer la localisation des réseaux hostiles,
et de préférence,
dans laquelle l'agent de rapport de statistiques distant transmets des alertes et des changements de configuration aux dispositifs mobiles relativement à l'activité de réseau hostile détectée,
et de préférence dans laquelle l'agent de rapport de statistiques distant transmets des alertes concernant l'activité de réseau hostile à des dispositifs connectés dédiés qui sont disposés comme capteurs stationnaires dans des zones sensibles pour le but premier d'information des utilisateurs dénués de composant de surveillance de bande de base des activités suspectes/anormales dans leurs dispositifs mobiles.

8. Un dispositif mobile consistant en un téléphone mobile avec une connectivité à un réseau cellulaire, configuré pour la détection d'une attaque sur un processeur de bande de base comprenant un processeur de bande de base et un processeur applicatif, pouvant ou non être intégré au sein d'un même semi-conducteur, dans lequel le processeur de bande de base est configuré pour gérer toutes les fonctions radios du dispositif mobile et le processeur de bande de base et le processeur applicatif sont configurés pour communiquer et échanger de l'information générée par les applications tournant sur le processeur applicatif, comprenant :
a) un composant de surveillance de bande de base configuré pour surveiller le comportement du processeur de bande de base au moyen de moyens disponibles sur le dispositif mobile respectif,
b) un composant de surveillance d'application configuré pour surveiller le comportant du processeur applicatif en conservant un enregistrement des paramètres, du temps d'exécution ou de la durée d'exécution des activités logicielles légitimes ou de l'utilisateur sur le processeur applicatif entraînant des activités de bande de base normales telles qu'attendues par l'utilisateur ;
c) un composant d'évaluation configuré pour corréler le comportement du processeur de bande de base avec le comportement du processeur applicatif afin de distinguer les activités de bande de base légitime des activités de bande de base suspectestanormales,
d) un composant de défense configuré pour lancer des contre-actions destinées à contre-carrer les activités de base de bande suspectes/anormales,
dans lequel le composant de surveillance de bande de base est configuré pour implémenter une ou plusieurs des actions :
- la collecte d'information sur la configuration de chemin audio,
- la collecte d'information sur le temps de réponse aux requêtes de services normales émanant du processeur applicatif à l'attention du processeur de bande de base,
- la collecte d'information obtenue de la sortie de débuggage du processeur de bande de base ;
et/ou
dans lequel le composant d'évaluation est configuré pour marquer la présence d'une station de base suspecte n'appartenant pas au réseau mobile légitime et le composant de défense attirant l'attention de l'utilisateur du dispositif mobile qu'une station de base suspecte (désignée « IMSI catcher ») a été détectée et/ou le composant de défense éteignant le processeur de bande de base pour empêcher son utilisation,
et de préférence dans lequel le composant d'évaluation est configuré pour marquer la présence d'une station de base suspecte n'appartenant pas au réseau mobile légitime en utilisant une ou plusieurs des informations suivantes :
- identification de cellule, distance, et force du signal,
- croissance/atténuation du signal
- changement de mode forcé de réseau 3G à réseau 2G ;
- changements non courants dans la liste des cellules voisines ;
- paramètres de configuration non courants de la station de base de mobile conçues pour apparaître plus « attractive » pour les dispositifs mobiles cibles ;
- des paramètres réseaux incohérents avec la localisation du dispositif mobile et/ou le réseau d'opérateur mobile couramment sélectionné.

9. Le dispositif mobile selon la revendication 8, dans lequel le composant de défense est configuré pour lancer des contre-actions destinées à contre-carrer les activités de base de bande suspectes/anormales parmi les suivantes :
le redémarrage du processeur de bande de base, le redémarrage du téléphone, l'abandon forcé de toutes les connexions.

10. Le dispositif mobile selon la revendication 8 ou 9, dans lequel le composant de surveillance de bande de base est configuré pour implémenter l'une ou plusieurs des actions suivantes :
- la collecte d'information sur la consommation de courant des composants matériels individuels du dispositif mobile,
et de préférence dans lequel la surveillance des interfaces de communication ou des zones mémoires partagées entre le processeur applicatif et le processeur de bande de base pour des motifs associés à des tentatives d'utilisation , comporte une ou plusieurs des actions suivantes :
- le suivi des messages, des structures de données ou de grands blocs de données incorrectement formatés ;
- le suivi de l'utilisation des procédures, des fonctions, des éléments ou des messages non vues durant une utilisation normale ;
- le suivi des tentatives d'accès aux zones mémoires non cohérentes avec les opérations normales,
et de préférence, dans lequel la collecte d'information obtenue de la sortie de déboggage du processeur de bande de base comporte une ou plusieurs des actions suivantes :
- le séquencement et le volume de l'établissement des appels vocaux ;
- le séquencemen tet le volume de la transmission de données,
- le séquencement et le volume de la transmission de message SMS,
- le séquencement et le volume de l'établissement des canaux de traffic.

11. Le dispositif mobile selon l'une quelconque des revendications 8 à 10 dans lequel le composant d'évaluation est configuré pour marquer l'absence de chiffrage de canal standard A5/1, A5/2 ou A5/3 sur les réseaux mobiles GSM ou 3G/UMTS/W-CDMA amenant le composant de défense à générer une alerte à l'utilisateur du dispositif mobile pour l'informer de la désactivation du chiffrage de canal.

12. Le dispositif mobile selon l'une quelconque des revendications 8 à 11, dans lequel le composant d'évaluation est configuré pour catégoriser les activités sur le processeur de bande de base en différentes classes se déclinant de normal/non suspecte jusqu'à hautement suspecte et, de préférence, dans lequel le composant d'évaluation est configuré pour tracer tous les événements dans un diagramme montrant l'activité de bande de base et le caractère suspect des activités de bande de base dans le temps et qui sont affichés soit sur l'écran du dispositif mobile ou sur un écran d'affichage externe,
et de préférence, dans lequel le composant d'évaluation est configuré pour compiler l'information sur les activités de bande de base suspectes dans le temps au sein d'une unique représentation graphique intégrée pour le niveau de menace global par rapport au processeur de bande de base du dispositif mobile ou dans la forme d'un « thermomètre de niveau de menace » qui est affiché soit sur l'écran du dispositif mobile ou sur un écran d'affichage externe.

13. Dispositif mobile selon l'une quelconque des revendications 8 à 12, dans lequel le composant d'évaluation est configuré pour enregistrer l'activité de bande de base dans un fichier de suivi qui peut être ultérieurement lu et combiné avec des fichiers de suivi d'autres dispositifs mobile par l'agent de rapport afin de parvenir à une vue d'ensemble du niveau de menace agrégé auquel une multiplicité de dispositifs mobiles sont exposés.

14. Dispositif mobile selon l'une quelconque des revendications 8 à 13, dans lequel le composant d'évaluation est configuré pour transmettre des données sur l'activité de bande de base et sur les paramètres réseau à un agent de rapport distant réalise des statistiques basées sur la localisation pour déterminer la localisation des réseaux hostiles,
et de préférence,
dans lequel l'agent de rapport de statistiques distant est configuré pour transmettre des alertes et des changements de configuration aux dispositifs mobiles relativement à l'activité de réseau hostile détectée,
et de préférence dans laquelle l'agent de rapport de statistiques distant est configuré pour transmettre des alertes concernant l'activité de réseau hostile à des dispositifs connectés dédiés qui sont disposés comme capteurs stationnaires dans des zones sensibles pour le but premier d'information des utilisateurs dénués de composant de surveillance de bande de base des activités suspectes/anormales dans leurs dispositifs mobiles.
